# EUROPEAN PATENT APPLICATION

(11) **EP 3 382 523 A2**
(43) Date of publication of application: **03.10.2018**
(21) Application number: 16806536.5
(22) Date of filing: 04.03.2016
(51) Int. Cl.: G06F 3/0488

(54) **METHOD AND DEVICE FOR IMPLEMENTING SCREENSHOT, AND TERMINAL**

(30) Priority: 25.11.2015 CN 201510829519
(71) Applicant: ZTE Corporation, Shenzhen, Guangdong 518057 (CN)
(72) Inventor: CAI, Dezun, Shenzhen Guangdong 518057 (CN)
(74) Representative: Studio Torta S.p.A.
(86) International application number: PCT/CN2016/075654
(87) International publication number: WO 2016/197638

(57) **Abstract**

A method and device for implementing a screenshot, and a terminal. The method comprises: receiving a trigger command to start a screenshot mode; selecting a screenshot model to be used from within a preset screenshot model set; determining a centre position and a touchscreen position of a screenshot area; according to a shape corresponding to the selected screenshot model, starting from the determined centre position of the screenshot area and expanding towards the surroundings according to the pressure of the touchscreen position so as to obtain the screenshot area for taking a screenshot; taking the screenshot according to the obtained screenshot area, and storing a screenshot image. The screenshot model to be used is selected from within the preset screenshot model set, and the screenshot area is obtained according to the shape of the screenshot model. The method thereby takes a screenshot according to the focus of the screenshot, simplifies a process for preventing privacy leaks, and improves the user experience.

## Description

### TECHNICAL FIELD

The present disclosure relates to, but is not limited to, the touch and display technologies, and in particular, to a method, device and terminal for taking a screenshot.

### BACKGROUND

With the rapid development of sensor technologies and the wide application of new materials, there are more and more human-computer interaction devices with touch screens (such as smart phones, tablet computers, etc.). Devices with touch screens enrich users' human-computer interaction modes. For example, by using a touch screen, a screenshot may be taken for contents displayed on the touch screen, and the contents displayed on the touch screen may be saved, which facilitates information sharing.

In related arts, a device having a touch screen generally includes rich screen capturing methods (or screenshot methods). Taking the smart phone as an example, a screenshot operation is usually taken by tapping or pressing a preset key or a preset combination of keys of the smart phone (such as a combination of a volume key and a power key). The screenshot image obtained after the screenshot is taken is generally stored in a storage medium of the smart phone.

In related arts, the screenshot operation can only be performed for the entire screen image.

The screen capturing mode is single and cannot highlight the focus of the screenshot as required by the users. Also, the full-screen screenshot image may easily reveal some privacy. If it is needed to highlight the focus of the screenshot or to process private contents, one need to use image processing applications to perform a secondary crop, which operation is time-consuming and complicated.

### SUMMARY

The following is a summary of the topics in this disclosure. This summary is not intended to limit the protection scope of the claims.

Embodiments of the present disclosure provides a method, device and terminal for taking a screenshot, which are capable of taking contents displayed on a screen according to the focus of the screenshot and improving an operation efficiency.

An embodiment of the present disclosure provides a method for taking a screenshot, including:
receiving a trigger command to start a screenshot mode;
selecting from a preset screenshot model set a screenshot model to be used;
determining a center position and a touch position of a screenshot region;
according to a shape corresponding to the selected screenshot model, obtaining the screenshot region for taking a screenshot by expanding from the determined center position of the screenshot region to regions around the center position according to a pressure at the touch position; and
taking the screenshot according to the obtained screenshot region and saving a screenshot image.

Optionally, the obtaining the screenshot region for taking a screenshot includes:
when the pressure at the touch position is detected to be greater than zero, determining an expansion speed for expanding from the center position of the screenshot region to the regions around the center position according to the detected pressure, expanding from the determined center position of the screenshot region to the regions around the center position at the determined expansion speed with the shape corresponding to the selected screenshot model as a shape of the screenshot region and not stopping the expansion until it is detected that the pressure at the touch position is equal to zero, and determining a region contained in the shape corresponding to the screenshot model when the expansion is stopped as the screenshot region for taking the screenshot.

Optionally, the obtaining the screenshot region for taking a screenshot includes:
when the pressure at the touch position is detected to be greater than zero, expanding from the center position of the screenshot region to the regions around the center position at a preset expansion speed with the shape corresponding to the selected screenshot model as a shape of the screenshot region and not stopping the expansion until it is detected that the pressure at the touch position is equal to zero, and determining a region contained in the shape corresponding to the screenshot model when the expansion is stopped as the screenshot region for taking the screenshot.

Optionally, the obtaining the screenshot region for taking a screenshot includes:
when the pressure at the touch position is detected to be greater than zero, expanding from the center position of the screenshot region to the regions around the center position from a time point when the pressure is greater than zero with the shape corresponding to the selected screenshot model as a shape of the screenshot region and not stopping the expansion until a duration in which the pressure is equal to or greater than zero reaches a preset duration threshold, and determining a region contained in the shape corresponding to the screenshot model when the expansion is stopped as the screenshot region for taking the screenshot.

Optionally, the method further includes: before saving the screenshot image,
selecting a preset color or other image as a background other than the screenshot region in the screenshot image.

According to a second aspect, an embodiment of the present disclosure provides a device for taking a screenshot, including:
a start module configured to receive a trigger command to start a screenshot mode;
a selection module configured to select from a preset screenshot model set a screenshot model to be used;
a determination module configured to determine a center position and a touch position of a screenshot region;
a screenshot module configured to, according to a shape corresponding to the selected screenshot model, obtain the screenshot region for taking a screenshot by expanding from the determined center position of the screenshot region to regions around the center position according to a pressure at the touch position; and
a saving module configured to take the screenshot according to the obtained screenshot region and save a screenshot image.

Optionally, the screenshot module is configured to:
when the pressure at the touch position is detected to be greater than zero, determine an expansion speed for expanding from the center position of the screenshot region to the regions around the center position according to the detected pressure, expand from the determined center position of the screenshot region to the regions around the center position at the determined expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

Optionally, the screenshot module is configured to:
when the pressure at the touch position is detected to be greater than zero, expand from the center position of the screenshot region to the regions around the center position at a preset expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

Optionally, the obtaining the screenshot region for taking a screenshot includes:
when the pressure at the touch position is detected to be greater than zero, expanding from the center position of the screenshot region to the regions around the center position from a time point when the pressure is greater than zero with the shape corresponding to the selected screenshot model as a shape of the screenshot region and not stopping the expansion until a duration in which the pressure is equal to or greater than zero reaches a preset period threshold, and determining a region contained in the shape corresponding to the screenshot model when the expansion is stopped as the screenshot region for taking the screenshot.

Optionally, the saving module is further configured to: before the screenshot image is saved,
select a preset color or other image as a background other than the screenshot region in the screenshot image.

According to a third aspect, an embodiment of the present disclosure provides a terminal which includes the device for taking a screenshot as described above.

As compared with related arts, the technical solutions provided by the embodiments of the present disclosure include: receiving a trigger command to start a screenshot mode; selecting from a preset screenshot model set a screenshot model to be used; determining a center position and a touch position of a screenshot region; according to a shape corresponding to the selected screenshot model, obtaining the screenshot region for taking a screenshot by expanding from the determined center position of the screenshot region to regions around the center position according to a pressure at the touch position; and taking the screenshot according to the obtained screenshot region and saving a screenshot image. By selecting from a preset screenshot model set a screenshot model to be used and obtaining the screenshot region according to the shape of the screenshot model, the method according to the embodiments of the present disclosure can take a screenshot according to the focus of the screenshot, which simplifies the processing procedure for avoiding privacy leakage and improves the user experiences.

Other aspects can become apparent after reading and understanding the drawings and detailed descriptions.

### BRIEF DESCRIPTION OF THE DRAWINGS

Fig. 1 is a flow chart of a method for taking a screenshot according to an embodiment of the present disclosure.
Fig. 2 is a block diagram of a device taking a screenshot according to an embodiment of the present disclosure.

### DETAILED DESCRIPTION

Hereinafter, embodiments of the present disclosure will be described in detail with reference to the accompanying drawings. It should be noted that, in the case of no conflict, the embodiments and the features in the embodiments in the present disclosure can be combined with each other arbitrarily.

The steps illustrated in the flow charts in the drawings may be performed in a computer system which has a set of computer-executable instructions for example. Also, although a logical order is shown in the flow chart, in some cases, the illustrated or described steps may be performed in an order other than the order as described herein.

The method involved in the embodiments of the present disclosure may be applied to a device with a touch screen, which may be a pressure-sensitive touch screen device with an analog resistive touch screen or a digital resistive touch screen.

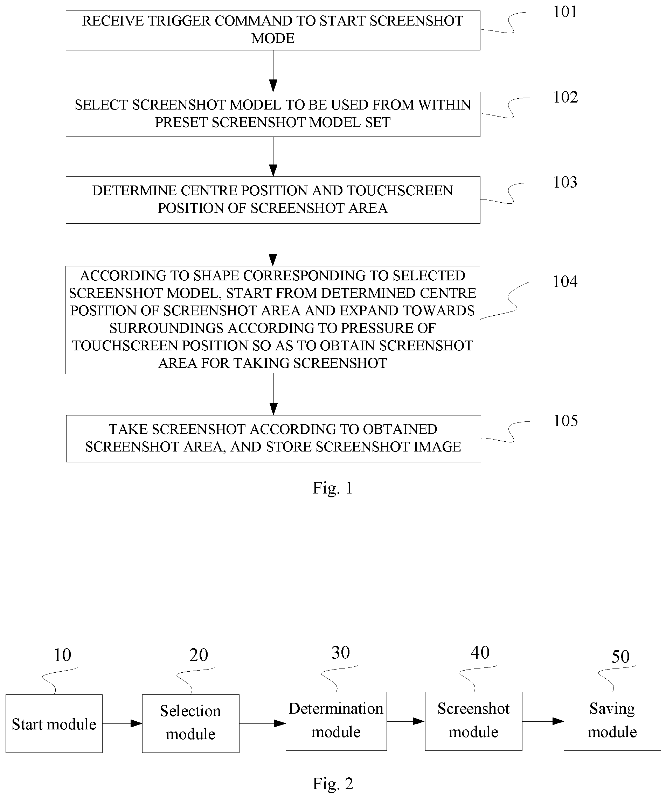

Fig. 1 is a flow chart of a method for taking a screenshot according to an embodiment of the present disclosure. As shown in Fig. 1, the method includes the following steps.

In step 101, a trigger command is received to start a screenshot mode.

According to an exemplary embodiment, the screenshot mode may be started by issuing a trigger command from a key of a touch device or by an application program. The key may be a main control, a shortcut key, a volume key, etc. The implementation may be based on actual conditions, and the present disclosure is not limited thereto.

In step 102, a screenshot model to be used is selected from a preset screenshot model set.

According to an exemplary embodiment, the preset screenshot model set may include: an ellipse model, and/or a polygon model, and/or an irregular model. The circle is one kind of the ellipse. The polygon includes: geometric shapes composed of three or more line segments, for example, quadrilaterals such as rectangles and trapezoids, and triangles; and regular or irregular geometric shapes composed of five or more line segments. The irregular models include irregular shapes such as a heart shape and a leaf outline shape.

According to an exemplary embodiment, the preset screenshot model set may include a rectangular model, a circular model, a polygonal model, and the like.

It should be noted that the screenshot model may be a model in drawing software, and custom geometry model may also be added.

In step 103, a center position and a touch position of a screenshot region are determined.

It should be noted that the center position and the touch position of the screenshot region may be the same. That is, a point on a touch screen which is tapped or pressed may be used as the center position of the screenshot region, and the center position of this point may also be selected as the start position, i.e., the touch position. For example, if the device with a touch screen is a smart phone, a user may set a circular model on a region where the screenshot is to be taken according to the actual situation, and taps or presses a point on the touch screen to determine the center of the circle model, and continue to press the center of the circle as the touch position to facilitate the user to accurately select the screenshot region. Alternatively, the center position and the touch position may be different, that is, after the center position of the screenshot region is determined, the user may tap or press another position of the touch screen as the touch position. For example, to continue the above example, the user may tap or press a point to determine the center of the circle model, and then taps or presses any point around the center of the circle as a touch position.

In step 104, according to a shape corresponding to the selected screenshot model, the screenshot region for taking a screenshot is obtained by expanding from the determined center position of the screenshot region to regions around the center position according to a pressure at the touch position.

According to an exemplary embodiment, a screenshot model to be used is selected, and the screenshot model has a corresponding shape. After determining the center position and the touch position of the screenshot region, the touch position is tapped. When the pressure at the touch position is detected to be greater than zero, an expansion speed for expanding from the center position of the screenshot region to the regions around the center position is determined according to the determined pressure, expansion is performed from the determined center position of the screenshot region to the regions around the center position at the determined expansion speed with the shape corresponding to the selected screenshot model as a shape of the screenshot region and the expansion is not stopped until it is detected that the pressure at the touch position is equal to zero, and a region contained in the shape corresponding to the screenshot model when the expansion is stopped is determined as the screenshot region for taking the screenshot.

It should be noted that the center position of the screenshot region and the center position of the shape of the screenshot model may coincide, and when the two center positions coincide, performing the expansion to the surroundings by using the shape corresponding to the selected screenshot model as the shape of the screenshot region refers to that after the center position of the screenshot region is determined, the expansion is performed from the center position of the shape of the screenshot model to the regions around the center position by using the shape corresponding to the selected screenshot model as the shape of the screenshot region. Further, the expansion to the surroundings may be an expansion along an X axis direction and a Y axis direction. The screenshot region obtained through such expansion may maintain the shape of the screenshot model. That is, if the shape of the selected screenshot model is a triangle, the triangle is used as the shape of the screenshot region, and by the expansion along the X and Y axis directions towards surroundings, an enlarged triangular region may be obtained and the enlarged triangular region is the screenshot region.

In addition, when determining the expansion speed for expanding from the center position of the screenshot region to the regions around the center position according to the detected pressure, the screenshot region will start to expand from the center position of the screenshot region to the surroundings according to the pressure at the touch position based on the shape corresponding to the preset screenshot model so as to select a desired screenshot region. For example, if the shape of the screenshot model is a circle, after a user determines a center of the circle, the user taps forcefully the center of the circle and then the screenshot region will expand from the center of the circle to the periphery in accordance with the circle, facilitating the user to quickly obtain the screenshot region.

The user may select the center position and the touch position as the same point, which is convenient for the user and the user can have a good experience.

The expansion speed to expand towards the surroundings is proportional to the pressure at which the user taps or presses the touch position; that is, the greater the pressure is, the faster the expansion speed will be, and thus the obtained screenshot region is expanded faster. When the pressure is equal to zero, the expansion may be stopped. In this way, the user can quickly select the screenshot region, thereby improving the user experience.

In the embodiments of the present disclosure, the center position and the touch position may be selected to be the same point, which is convenient for users to operate and can improve the user experience.

According to an exemplary embodiment, the obtaining the screenshot region for taking a screenshot includes:
when the pressure at the touch position is detected to be greater than zero, expanding from the center position of the screenshot region to the regions around the center position at a preset expansion speed with the shape corresponding to the selected screenshot model as a shape of the screenshot region and not stopping the expansion until it is detected that the pressure at the touch position is equal to zero, and determining a region contained in the shape corresponding to the screenshot model when the expansion is stopped as the screenshot region for taking the screenshot.

When the pressure at the touch position is detected to be greater than zero, expansion is performed from the center position of the screenshot region to the surroundings at the preset speed and is not stopped until it is detected that the pressure is equal to zero. The current expanded region is determined as the screenshot region.

According to an exemplary embodiment, a preset expansion speed may be preset on the device terminal having a touch screen. The speed may be set according to the response time of the pressure sensor and actual conditions, so that when a user taps or presses the touch position, the screenshot region will expand from the determined center position of the screenshot region towards the surroundings at a constant speed, regardless of the pressure tapped or pressed on the touch screen by the user. This is useful for the user to accurately select the area of the screenshot region.

According to an exemplary embodiment, if a pressure at the touch position is detected, expansion is performed from the center position of the screenshot region towards the surroundings from the time point when the pressure is detected, and the expansion is not stopped until the duration of the pressure reaches a preset duration threshold. The current expanded region is determined as the screenshot region.

According to an exemplary embodiment, the obtaining the screenshot region for taking a screenshot includes:
when the pressure at the touch position is detected to be greater than zero, expanding from the center position of the screenshot region to the surroundings from a time point when the pressure is greater than zero with the shape corresponding to the selected screenshot model as a shape of the screenshot region and not stopping the expansion until a time period during which the pressure is equal to or greater than zero reaches a preset period threshold, and determining a region contained in the shape corresponding to the screenshot model when the expansion is stopped as the screenshot region for taking the screenshot.

According to an exemplary embodiment, if it is detected that the pressure at the touch position is greater than zero, a statistics on the time period (or the duration) of the pressure is performed, and the expansion is stopped when the time period of the pressure reaches the preset period threshold (or a duration threshold), regardless of whether the screenshot region expands from the center position of the screenshot region to the surroundings at a constant speed or at a speed varying according to a magnitude of the pressure. The period threshold may be determined according to actual situations so as to make it convenient for the user to select the screenshot region and improve the user experience.

According to an exemplary embodiment, if the obtained screenshot region for taking a screenshot is not proper, a cancellation operation may be performed by receiving an external instruction.

In step 105, the screenshot is taken according to the obtained screenshot region and a screenshot image is saved.

According to an exemplary embodiment, before saving the screenshot image, the method may further include:
selecting a preset color or other image as a background other than the screenshot region in the screenshot image.

According to an exemplary embodiment, the user may select a background other than the screenshot region according to a preset color or other image so as to fill a gap around the screenshot region. The color may be red, blue, black, white, and so on, so as to highlight the focus of the contents of the screenshot.

It should be noted that in the methods provided by the embodiments of the present disclosure, receiving the trigger instruction may be realized by a physical button or a touch screen, selecting the type of the touch screen and determining the center position may be realized by the touch screen, obtaining the screenshot region may be realized by a combination of a pressure sensor and the touch screen, and determining of whether the pressure is equal to zero and whether the expansion is stopped may be realized by a center processor.

In addition, the methods provided by the embodiments of the present disclosure may be implemented by a device with a touch screen.

By selecting from a preset screenshot model set a screenshot model to be used and obtaining the screenshot region according to the shape of the screenshot model, the methods provided by the embodiments of the present disclosure can take a screenshot according to the focus of the screenshot, which simplifies the processing procedure for avoiding privacy leakage and improves the user experience.

Fig. 2 is a block diagram of a device for taking a screenshot according to an embodiment of the present disclosure. As shown in Fig. 2, the device includes a start module 10, a selection module 20, a determination module 30, a screenshot module 40, and a saving module 50.

The start module 10 is configured to receive a trigger command to start a screenshot mode.

The selection module 20 is configured to select from a preset screenshot model set a screenshot model to be used.

The determination module 30 is configured to determine a center position and a touch position of a screenshot region.

The screenshot module 40 is configured to, according to a shape corresponding to the selected screenshot model, obtain the screenshot region for taking a screenshot by expanding from the center position of the screenshot region to regions around the center position according to a pressure at the touch position.

The saving module 50 is configured to take the screenshot according to the obtained screenshot region and save a screenshot image.

In the device for taking a screenshot applied in a terminal with a touch screen according to the embodiments of the present disclosure, the start module 10 is configured to receive a trigger command to start a screenshot mode, the selection module 20 is configured to select from a preset screenshot model set a screenshot model to be used, the determination module 30 is configured to determine a center position and a touch position of a screenshot region, the screenshot module 40 is configured to, according to a shape corresponding to the selected screenshot model, obtain the screenshot region for taking a screenshot by expanding from the center position of the screenshot region to regions around the center position according to a pressure at the touch position, and the saving module 50 is configured to take the screenshot according to the obtained screenshot region and save a screenshot image. The user may take a focus image according to screenshot requirements, the operation is simple and the user experience can be improved.

According to an exemplary embodiment, the preset screenshot model set may include a rectangular model, a circular model, and a polygonal model.

The device provided by the embodiments of the present disclosure may perform the above method embodiments, and the implementation principle and the technical effects are similar as those of the method embodiments, which is not elaborated herein.

Further, the screenshot module 40 is configured to:
when the pressure at the touch position is detected to be greater than zero, determine an expansion speed for expanding from the center position of the screenshot region to the regions around the center position according to the detected pressure, expand from the determined center position of the screenshot region to the regions around the center position at the determined expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

The device provided by the embodiments of the present disclosure may perform the above method embodiments, and the implementation principle and the technical effects are similar as those of the method embodiments, which is not elaborated herein.

According to an exemplary embodiment, the screenshot module 40 is configured to:
when the pressure at the touch position is detected to be greater than zero, expand from the center position of the screenshot region to the regions around the center position at a preset expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

The device provided by the embodiment of the present disclosure may perform the above method embodiments, and the implementation principle and the technical effects are similar as those of the method embodiments, which is not elaborated herein.

According to an exemplary embodiment, the screenshot module 40 is configured to:
the obtaining the screenshot region for taking a screenshot includes:
when the pressure at the touch position is detected to be greater than zero, expanding from the center position of the screenshot region to the regions around the center position from a time point when the pressure is greater than zero with the shape corresponding to the selected screenshot model as a shape of the screenshot region and not stopping the expansion until a time period during which the pressure is equal to or greater than zero reaches a preset period threshold, and determining a region contained in the shape corresponding to the screenshot model when the expansion is stopped as the screenshot region for taking the screenshot.

The device provided by the embodiment of the present disclosure may perform the above method embodiments, and the implementation principle and the technical effects are similar as those of the method embodiments, which is not elaborated herein.

According to an exemplary embodiment, the saving module 50 is further configured to: before the screenshot image is saved,
select a preset color or other image as a background other than the screenshot region in the screenshot image.

The device provided by the embodiment of the present disclosure may perform the above method embodiments, and the implementation principle and the technical effects are similar as those of the method embodiments, which is not elaborated herein.

An embodiment of the present disclosure provides a terminal including the device for taking a screenshot as described above. The terminal provided by the embodiments of the present disclosure may perform the above method embodiments, and the implementation principle and the technical effects are similar as those of the method embodiments, which is not elaborated herein.

A person of ordinary skill in the art can understand that all or part of the steps in the above methods can be implemented by instructing related hardware (for example a processor) to operate by a program. The program can be stored in a computer-readable storage medium, such as a read-only memory, a magnetic disk, or a compact disk, and so on. Optionally, all or some of the steps in the above embodiments may also be implemented using one or more integrated circuits. Correspondingly, each module/unit in the above embodiments may be implemented in the form of hardware, for example, through an integrated circuit to achieve corresponding functions, and may also be implemented in the form of a software function module, for example, corresponding functions may be realized by executing a program/instruction stored in a memory by a processor. The present disclosure is not limited to any specific form of hardware and software combination.

Although the embodiments disclosed in the present disclosure are as described above, the contents described are merely exemplary embodiments for facilitating understanding of the present disclosure and are not intended to limit the present disclosure. That is the present disclosure is not limited to the specific implementations as described in the embodiments. Any person skilled in the art may perform any modifications and changes in the form and details of the implementation without departing from the spirit and scope disclosed herein, but the scope of the present disclosure is defined by the appended claims.

### Industrial Applicability

The technical solutions as described can take a screenshot according to the focus of the screenshot, which simplifies the processing procedure for avoiding privacy leakage and improves the user experience.

## Claims

1. A method for taking a screenshot, comprising:
receiving a trigger command to start a screenshot mode;
selecting from a preset screenshot model set a screenshot model to be used;
determining a center position and a touch position of a screenshot region;
according to a shape corresponding to the selected screenshot model, obtaining the screenshot region for taking a screenshot by expanding from the determined center position of the screenshot region to regions around the center position according to a pressure at the touch position; and
taking the screenshot according to the obtained screenshot region and saving a screenshot image.

2. The method according to claim 1, wherein the obtaining the screenshot region for taking a screenshot comprises:
when the pressure at the touch position is detected to be greater than zero, determining an expansion speed for expanding from the center position of the screenshot region to the regions around the center position according to the detected pressure, expanding from the determined center position of the screenshot region to the regions around the center position at the determined expansion speed with the shape corresponding to the selected screenshot model as a shape of the screenshot region and not stopping the expansion until it is detected that the pressure at the touch position is equal to zero, and determining a region contained in the shape corresponding to the screenshot model when the expansion is stopped as the screenshot region for taking the screenshot.

3. The method according to claim 1, wherein the obtaining the screenshot region for taking a screenshot comprises:
when the pressure at the touch position is detected to be greater than zero, expanding from the center position of the screenshot region to the regions around the center position at a preset expansion speed with the shape corresponding to the selected screenshot model as a shape of the screenshot region and not stopping the expansion until it is detected that the pressure at the touch position is equal to zero, and determining a region contained in the shape corresponding to the screenshot model when the expansion is stopped as the screenshot region for taking the screenshot.

4. The method according to claim 1, wherein the obtaining the screenshot region for taking a screenshot comprises:
when the pressure at the touch position is detected to be greater than zero, expanding from the center position of the screenshot region to the regions around the center position from a time point when the pressure is greater than zero with the shape corresponding to the selected screenshot model as a shape of the screenshot region and not stopping the expansion until a duration in which the pressure is equal to or greater than zero reaches a preset duration threshold, and determining a region contained in the shape corresponding to the screenshot model when the expansion is stopped as the screenshot region for taking the screenshot.

5. The method according to any one of claims 1 to 4, further comprising: before saving the screenshot image, selecting a preset color or other image as a background other than the screenshot region in the screenshot image.

6. A device for taking a screenshot, comprising:
a start module configured to receive a trigger command to start a screenshot mode;
a selection module configured to select from a preset screenshot model set a screenshot model to be used;
a determination module configured to determine a center position and a touch position of a screenshot region;
a screenshot module configured to, according to a shape corresponding to the selected screenshot model, obtain the screenshot region for taking a screenshot by expanding from the determined center position of the screenshot region to regions around the center position according to a pressure at the touch position; and
a saving module configured to take the screenshot according to the obtained screenshot region and save a screenshot image.

7. The device according to claim 6, wherein the screenshot module is configured to:
when the pressure at the touch position is detected to be greater than zero, determine an expansion speed for expanding from the center position of the screenshot region to the regions around the center position according to the detected pressure, expand from the determined center position of the screenshot region to the regions around the center position at the determined expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

8. The device according to claim 6, wherein the screenshot module is configured to:
when the pressure at the touch position is detected to be greater than zero, expand from the center position of the screenshot region to the regions around the center position at a preset expansion speed with the shape corresponding to the selected screenshot model as a shape of the screenshot region and not stop the expansion until it is detected that the pressure at the touch position is equal to zero, and determine a region contained in the shape corresponding to the screenshot model when the expansion is stopped as the screenshot region for taking the screenshot.

9. The device according to claim 6, wherein the obtaining the screenshot region for taking a screenshot comprises:
when the pressure at the touch position is detected to be greater than zero, expanding from the center position of the screenshot region to the regions around the center position from a time point when the pressure is greater than zero with the shape corresponding to the selected screenshot model as a shape of the screenshot region and not stopping the expansion until a duration in which the pressure is equal to or greater than zero reaches a preset duration threshold, and determining a region contained in the shape corresponding to the screenshot model when the expansion is stopped as the screenshot region for taking the screenshot.

10. The device according to any one of claims 6 to 9, wherein the saving module is further configured to: before the screenshot image is saved, select a preset color or other image as a background other than the screenshot region in the screenshot image.

11. A terminal comprises the device for taking a screenshot according to any one of claims 6 to 10.

12. A computer storage medium having computer executable instructions stored therein, which are executed to perform the method according to any one of claims 1 to 5.
